(19) Europäisches Patentamt
European Patent Office
Office européen des brevets

(11) **EP 4 564 882 A1**

(12) **EUROPEAN PATENT APPLICATION**
published in accordance with Art. 153(4) EPC

(43) Date of publication:
**04.06.2025 Bulletin 2025/23**

(21) Application number: **23851459.0**

(22) Date of filing: **29.06.2023**

(51) International Patent Classification (IPC):
*H04W 24/02* (2009.01)      *H04W 56/00* (2009.01)

(52) Cooperative Patent Classification (CPC):
**H04W 24/02; H04W 24/08; H04W 48/08;
H04W 48/16; H04W 56/00**

(86) International application number:
**PCT/CN2023/104313**

(87) International publication number:
**WO 2024/032232 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022  CN 202210971900**

(71) Applicant: **Huawei Technologies Co., Ltd.
Shenzhen, Guangdong 518129 (CN)**

(72) Inventors:
• **HOU, Hailong
  Shenzhen, Guangdong 518129 (CN)**
• **LUO, Zhihu
  Shenzhen, Guangdong 518129 (CN)**
• **JIN, Zhe
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND APPARATUS**

(57)    Embodiments of this application provide a communication method and apparatus, to resolve a problem of how a network device configures, in a BWP, an NCD-SSB used for cell measurement. The method and apparatus may be used in an M2M system. The method includes: A network device determines that at least one non-cell-defining synchronization signal/physical broadcast channel block NCD-SSB in X NCD-SSBs in a first bandwidth part BWP is used for measurement, where the X NCD-SSBs have different frequency domain positions, and X is a positive integer. In addition, the network device sends first configuration information to a terminal device, where the first configuration information includes configuration parameters of the X NCD-SSBs. Further, the network device may send the X NCD-SSBs based on the configuration parameters of the X NCD-SSBs, where the X NCD-SSBs include at least one NCD-SSB used for measurement.

```
   ┌──────────┐                        ┌──────────┐
   │ Network  │                        │ Terminal │
   │ device   │                        │ device   │
   └────┬─────┘                        └────┬─────┘
┌───────┴───────────────────┐                │
│ S401: Determine that at least one          │
│ NCD-SSB in X NCD-SSBs in a first           │
│ BWP is used for measurement                │
└───────┬───────────────────┘                │
        │   S402: First configuration         │
        │         information                 │
        │────────────────────────────────────▶│
        │   S403: X NCD-SSBs                   │
        │──────────────────────▶              │
        │              ┌──────────────────────┴──────┐
        │              │ S404: Receive, from the network device based on a │
        │              │ configuration parameter of the at least one NCD-  │
        │              │ SSB used for measurement in a configuration       │
        │              │ parameter of the X NCD-SSBs, the at least one     │
        │              │ NCD-SSB used for measurement                      │
        │              └─────────────────────────────┘
```

FIG. 4

EP 4 564 882 A1

## Description

This application claims priority to Chinese Patent Application No. 202210971900.5, filed with the China National Intellectual Property Administration on August 12, 2022 and entitled "COMMUNICATION METHOD AND APPARATUS", which is incorporated herein by reference in its entirety.

## TECHNICAL FIELD

Embodiments of this application relate to the communication field, and in particular, to a communication method and apparatus.

## BACKGROUND

In a new radio (new radio, NR) system, when accessing a network, a terminal device implements time-frequency synchronization with a network device by obtaining a synchronization signal/physical broadcast channel block (synchronization signal block/physical broadcast channel block, SSB). There are two types of SSBs: a cell-defining SSB (cell-defining SSB, CD-SSB) and a non-cell-defining SSB (non-cell-defining SSB, NCD-SSB). The CD-SSB and the NCD-SSB have a same structure but different functions and application scenarios. Both the CD-SSB and the NCD-SSB may be used for channel quality measurement, radio resource management (radio resource management, RRM) measurement, radio link monitoring (radio link monitoring, RLM) measurement, beam management (beam management, BM) measurement, beam failure detection (beam failure detection, BFD) measurement, and the like. However, the CD-SSB includes related information about a system information block (system information block, SIB) 1, while the NCD-SSB does not include the related information about the SIB1. Therefore, the CD-SSB may be further used for cell search, camping, access, and the like.

Currently, when no CD-SSB used for cell measurement is configured in an active bandwidth part (bandwidth part, BWP), the network device may alternatively configure, in the BWP, an NCD-SSB used for cell measurement. However, there is no related solution currently for how the network device configures, in the BWP, the NCD-SSB used for cell measurement.

## SUMMARY

Embodiments of this application provide a communication method and apparatus, to resolve a problem of how a network device configures, in a BWP, an NCD-SSB used for cell measurement.

To achieve the foregoing objective, the following technical solutions are used in embodiments of this application.

According to a first aspect, a communication method is provided. The method may be performed by a network device, may be performed by a part of the network device, for example, a processor, a chip, or a chip system of the network device, or may be implemented by a logical module or software that can implement all or some functions of the network device. The following uses an example in which the method is performed by the network device for description. The communication method includes: The network device determines that at least one non-cell-defining synchronization signal/physical broadcast channel block NCD-SSB in X NCD-SSBs in a first bandwidth part BWP is used for measurement. The X NCD-SSBs have different frequency domain positions, and X is a positive integer. The network device sends first configuration information to a terminal device. The first configuration information includes configuration parameters of the X NCD-SSBs. The network device sends the X NCD-SSBs based on the configuration parameters of the X NCD-SSBs. The X NCD-SSBs include at least one NCD-SSB used for measurement.

Based on the communication method in the first aspect, the network device may configure one or more NCD-SSBs in one BWP, and may configure at least one NCD-SSB used for measurement when configuring the plurality of NCD-SSBs. In this way, a measurement problem of the terminal device when there is no CD-SSB in one BWP can be resolved, and an NCD-SSB configuration in the BWP is more flexible, so that resource utilization can be improved. In addition, the network device may further send a configuration parameter of the plurality of configured NCD-SSBs to the terminal device. In this way, a problem of how the terminal device performs rate matching when a plurality of NCD-SSBs are configured in one BWP can be further resolved, impact on PDSCH demodulation can be avoided, and data transmission efficiency can be improved.

Optionally, the communication method provided in this embodiment of this application may further include: The network device sends first indication information to the terminal device, where the first indication information indicates the at least one NCD-SSB used for measurement in the X NCD-SSBs. In this way, when a plurality of NCD-SSBs are configured in one BWP, the network device may indicate, to the terminal device by using the first indication information, specific NCD-SSBs used for measurement. This can resolve a problem that the terminal device cannot learn of specific NCD-SSBs to be received for measurement, and improve communication reliability.

Optionally, the first configuration information may further include first indication information, and the first indication information indicates the at least one NCD-SSB used for measurement in the X NCD-SSBs. In this way, the first indication information may be carried in the first configuration information and sent together with the configuration parameters of the X NCD-SSBs, so that signaling overheads can be reduced, and a measurement rate of the terminal device can be increased.

Optionally, the configuration parameters of the X NCD-SSBs includes at least one of the following: frequency domain position information, time domain position information, periodicity information, beam information, or transmit power information.

In a possible design solution, the frequency domain position information of the X NCD-SSBs may include frequency domain position information of each NCD-SSB in the X NCD-SSBs relative to a reference resource block, or an absolute radio frequency channel number of the X NCD-SSBs.

In a possible design solution, the time domain position information of the X NCD-SSBs may include position information of each NCD-SSB in the X NCD-SSBs relative to a cell-defining synchronization signal/physical broadcast channel block CD-SSB, or a system frame number and/or a half-frame number of a $1^{st}$ SSB synchronization burst set of each NCD-SSB in the X NCD-SSBs.

In a possible design solution, the position information of each NCD-SSB in the X NCD-SSBs relative to the CD-SSB may include an offset value of the $1^{st}$ synchronization burst set of each NCD-SSB in the X NCD-SSBs relative to a $1^{st}$ synchronization burst set of the CD-SSB. In this way, to ensure coverage of an SSB, the network device usually performs power boosting (power boosting) on the SSB. Therefore, if the network device needs to send a plurality of SSBs at a time, implementation of the network device is challenged. An offset between time domain positions of an NCD-SSB and a CD-SSB can prevent the network device from sending a plurality of SSBs at a time, prevent the network device from performing power boosting on a plurality of SSB signals at a time, and reduce complexity of the network device.

In a possible design solution, the offset value may include at least one of the following: 5 ms, 10 ms, 15 ms, 20 ms, 40 ms, 60 ms, or 80 ms. In this way, when the offset value is 5 ms, 10 ms, or 15 ms, the NCD-SSB and the CD-SSB may be in same 20 ms. In addition, because SIB1 and paging need to be sent in a beam sweeping manner in 20 ms, when the offset value is 20 ms, 40 ms, 60 ms, or 80 ms, the NCD-SSB and the CD-SSB may not be in the same 20 ms, so that impact of introduction of the NCD-SSB on an existing channel transmission time sequence is avoided, and the complexity of the network device is reduced.

In a possible design solution, the X NCD-SSBs may have different time domain position information. In this way, that the X NCD-SSBs have different time domain position information means that offsets between the NCD-SSBs and the CD-SSB are different. This further prevents the network device from sending a plurality of SSBs at a time, prevents the network device from performing power boosting on a plurality of SSB signals at a time, and reduces the complexity of the network device.

In a possible design solution, the X NCD-SSBs may have different periodicity information. In this way, the X NCD-SSBs have different periodicity information, so that the network device can more flexibly balance measurement performance of the terminal device and SSB resource overheads. This ensures implementation flexibility of the network device.

In a possible design solution, a value of a periodicity of the X NCD-SSBs may be any one of the following: 320 ms, 640 ms, 1280 ms, or 2560 ms. In this way, a longer NCD-SSB periodicity helps reduce NCD-SSB resource overheads, so that network resource utilization is improved.

In a possible design solution, a beam of the X NCD-SSBs may be the same as beam information of the CD-SSB. In this way, the beam of the X NCD-SSBs is the same as the beam information of the CD-SSB, so that implementation complexity of the terminal device and the network device can be reduced.

In a possible design solution, the X NCD-SSBs may have same transmit power information. In this way, the X NCD-SSBs may have the same transmit power information, so that it can be ensured that the X NCD-SSBs have same coverage performance.

According to a second aspect, a communication method is provided. The method may be performed by a terminal device, may be performed by a part of the terminal device, for example, a processor, a chip, or a chip system of the terminal device, or may be implemented by a logical module or software that can implement all or some functions of the terminal device. The following uses an example in which the method is performed by the terminal device for description. The communication method includes: The terminal device receives first configuration information from a network device. The first configuration information includes a configuration parameter of X non-cell-defining synchronization signal/physical broadcast channel blocks NCD-SSBs in a first bandwidth part BWP, the X NCD-SSBs have different frequency domain positions, at least one NCD-SSB in the X NCD-SSBs is used for measurement, and X is a positive integer. The terminal device receives, from the network device based on a configuration parameter of at least one NCD-SSB used for measurement in the configuration parameters of the X NCD-SSBs, the at least one NCD-SSB used for measurement.

Optionally, the communication method provided in this embodiment of this application may further include: The terminal device receives first indication information from the network device, where the first indication information indicates the at least one NCD-SSB used for measurement in the X NCD-SSBs.

Optionally, the first configuration information includes first indication information, and the first indication information indicates the at least one NCD-SSB used for measurement in the X NCD-SSBs.

In a possible design solution, the communication method provided in this embodiment of this application may further include: The terminal device determines, based on the configuration parameters of the X NCD-SSBs and the first indication information, the configuration parameter of the at least one NCD-SSB used for measurement.

In another possible design solution, the communication method provided in this embodiment of this application may further include: The terminal device determines, based on the configuration parameters of the X NCD-SSBs and preconfigured information about an NCD-SSB used for measurement, the configuration parameter of the at least one NCD-SSB used for measurement.

Optionally, the configuration parameters of the X NCD-SSBs includes at least one of the following: frequency domain position information, time domain position information, periodicity information, beam information, or transmit power information.

In a possible design solution, the frequency domain position information of the X NCD-SSBs may include frequency domain position information of each NCD-SSB in the X NCD-SSBs relative to a reference resource block, or an absolute radio frequency channel number of the X NCD-SSBs.

In a possible design solution, the time domain position information of the X NCD-SSBs may include position information of each NCD-SSB in the X NCD-SSBs relative to a cell-defining synchronization signal/physical broadcast channel block CD-SSB, or a system frame number and/or a half-frame number of a 1st SSB synchronization burst set of each NCD-SSB in the X NCD-SSBs.

In a possible design solution, the position information of each NCD-SSB in the X NCD-SSBs relative to the CD-SSB may include an offset value of the 1st synchronization burst set of each NCD-SSB in the X NCD-SSBs relative to a 1st synchronization burst set of the CD-SSB.

In a possible design solution, the offset value may include at least one of the following: 5 ms, 10 ms, 15 ms, 20 ms, 40 ms, 60 ms, or 80 ms.

In a possible design solution, the X NCD-SSBs may have different time domain position information.

In a possible design solution, the X NCD-SSBs may have different periodicity information.

In a possible design solution, a value of a periodicity of the X NCD-SSBs may be any one of the following: 320 ms, 640 ms, 1280 ms, or 2560 ms.

In a possible design solution, a beam of the X NCD-SSBs may be the same as beam information of the CD-SSB.

In a possible design solution, the X NCD-SSBs may have same transmit power information.

In addition, for technical effects of the communication method according to the second aspect, refer to technical effects of the method according to the first aspect. Details are not described herein again.

According to a third aspect, a communication method is provided. The method may be performed by a network device, may be performed by a part of the network device, for example, a processor, a chip, or a chip system of the network device, or may be implemented by a logical module or software that can implement all or some functions of the network device. The following uses an example in which the method is performed by the network device for description. The communication method includes: The network device determines a rate matching pattern. The rate matching pattern includes a time-frequency resource of Y non-cell-defining synchronization signal/physical broadcast channel blocks NCD-SSBs in a first bandwidth part BWP, where the Y NCD-SSBs have different frequency domain positions, and Y is a positive integer. The network device sends a configuration parameter of the rate matching pattern to a terminal device.

Based on the communication method in the third aspect, when configuring a plurality of NCD-SSBs in one BWP, the network device may send the configuration parameter of the rate matching pattern to the terminal device, and cover, by using the rate matching pattern, a time-frequency resource of one or more NCD-SSBs configured in the BWP, without sending a configuration parameter of the plurality of NCD-SSBs to the terminal device. This is transparent to the terminal device, so that calculation complexity of the terminal device can be reduced, and a calculation rate of the terminal device can be improved.

Further, the configuration parameter of the rate matching pattern may include a first bitmap and a second bitmap. Each bit in the first bitmap indicates whether an associated time domain symbol belongs to the rate matching pattern, and each bit in the second bitmap indicates whether an associated resource block or resource element belongs to the rate matching pattern. In this way, the rate matching pattern may indicate the time-frequency resource of the NCD-SSB by using a bitmap, so that resource overheads can be reduced, and a data transmission rate can be increased.

In a possible design solution, a bit length of the first bitmap is equal to a quantity of time domain symbols in preset duration, where the quantity of time domain symbols in the preset duration is greater than a quantity of time domain symbols in two slots. In this way, a rate matching pattern with more than two slots (slots) may be defined, and a wider time-frequency resource is covered, so that the rate matching pattern is more accurate.

Further, a time domain resource indicated by the first bitmap and a frequency domain resource indicated by the second bitmap form a first time-frequency resource pair. In this way, the terminal device may determine, based on the first bitmap and the second bitmap, the time-frequency resource occupied by the NCD-SSB, to determine a time-frequency resource used for rate matching.

Optionally, the configuration parameter of the rate matching pattern may further include a third bitmap, where each bit in the third bitmap indicates whether an associated first time-frequency resource pair exists.

In a possible design solution, a periodicity of the rate matching pattern is equal to a bit length of the third bitmap.

In a possible design solution, the periodicity of the rate matching pattern is greater than or equal to a maximum periodicity in periodicities corresponding to all of the Y NCD-SSBs. In this way, a rate matching pattern with a longer periodicity is more accurate.

According to a fourth aspect, a communication method is provided. The method may be performed by a terminal device, may be performed by a part of the terminal device, for example, a processor, a chip, or a chip system of the terminal device, or may be implemented by a logical module or software that can implement all or some functions of the terminal device. The following uses an example in which the method is performed by the terminal device for description. The communication method includes: The terminal device receives a configuration parameter of a rate matching pattern from a network device. The rate matching pattern includes a time-frequency resource of Y non-cell-defining synchronization signal/physical broadcast channel blocks NCD-SSBs in a first bandwidth part BWP, where the Y NCD-SSBs have different frequency domain positions, and Y is a positive integer. The terminal device determines the rate matching pattern based on the configuration parameter of the rate matching pattern.

Further, the configuration parameter of the rate matching pattern may include a first bitmap and a second bitmap. Each bit in the first bitmap indicates whether an associated time domain symbol belongs to the rate matching pattern, and each bit in the second bitmap indicates whether an associated resource block or resource element belongs to the rate matching pattern.

In a possible design solution, a bit length of the first bitmap is equal to a quantity of time domain symbols in preset duration, where the quantity of time domain symbols in the preset duration is greater than a quantity of time domain symbols in two slots.

Further, a time domain resource indicated by the first bitmap and a frequency domain resource indicated by the second bitmap form a first time-frequency resource pair.

Optionally, the configuration parameter of the rate matching pattern may further include a third bitmap, where each bit in the third bitmap indicates whether an associated first time-frequency resource pair exists.

In a possible design solution, a periodicity of the rate matching pattern is equal to a bit length of the third bitmap.

In a possible design solution, the periodicity of the rate matching pattern is greater than or equal to a maximum periodicity in periodicities corresponding to all of the Y NCD-SSBs.

In addition, for technical effects of the communication method according to the fourth aspect, refer to the technical effects of the method according to the second aspect. Details are not described herein again.

According to a fifth aspect, a communication apparatus is provided. The communication apparatus includes a processing module and a transceiver module. The processing module is configured to determine that at least one non-cell-defining synchronization signal/physical broadcast channel block NCD-SSB in X NCD-SSBs in a first bandwidth part BWP is used for measurement. The X NCD-SSBs have different frequency domain positions, and X is a positive integer. The transceiver module is configured to send first configuration information to a terminal device. The first configuration information includes configuration parameters of the X NCD-SSBs. The transceiver module is further configured to send the X NCD-SSBs based on the configuration parameters of the X NCD-SSBs. The X NCD-SSBs include at least one NCD-SSB used for measurement.

Optionally, the transceiver module is further configured to send first indication information to the terminal device. The first indication information indicates the at least one NCD-SSB used for measurement in the X NCD-SSBs.

Optionally, the first configuration information may further include first indication information, and the first indication information indicates the at least one NCD-SSB used for measurement in the X NCD-SSBs.

Optionally, the configuration parameters of the X NCD-SSBs may include at least one of the following: frequency domain position information, time domain position information, periodicity information, beam information, or transmit power information.

In a possible design solution, the frequency domain position information of the X NCD-SSBs may include frequency domain position information of each NCD-SSB in the X NCD-SSBs relative to a reference resource block, or an absolute radio frequency channel number of the X NCD-SSBs.

In a possible design solution, the time domain position information of the X NCD-SSBs may include position information of each NCD-SSB in the X NCD-SSBs relative to a cell-defining synchronization signal/physical broadcast channel block CD-SSB, or a system frame number and/or a half-frame number of a 1st SSB synchronization burst set of each NCD-SSB in the X NCD-SSBs.

In a possible design solution, the position information of each NCD-SSB in the X NCD-SSBs relative to the CD-SSB may include an offset value of the 1st synchronization burst set of each NCD-SSB in the X NCD-SSBs relative to a 1st synchronization burst set of the CD-SSB.

In a possible design solution, the offset value may include at least one of the following: 5 ms, 10 ms, 15 ms, 20 ms, 40 ms, 60 ms, or 80 ms.

In a possible design solution, the X NCD-SSBs may have different time domain position information.

In a possible design solution, the X NCD-SSBs may have different periodicity information.

In a possible design solution, a value of a periodicity of the X NCD-SSBs may be any one of the following: 320 ms, 640 ms, 1280 ms, or 2560 ms.

In a possible design solution, a beam of the X NCD-SSBs may be the same as beam information of the CD-SSB.

In a possible design solution, the X NCD-SSBs may have same transmit power information.

Optionally, the transceiver module may include a receiving module and a sending module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module. The storage module stores a program or instructions. When the processing module executes the program or the instructions, the communication apparatus according to the fifth aspect can perform the method according to the first aspect.

It should be noted that the communication apparatus according to the fifth aspect may be a network device, may be a chip (system) or another part or component disposed in the network device, or may be an apparatus including the network device.

This is not limited in this embodiment of this application.

According to a sixth aspect, a communication apparatus is provided. The communication apparatus includes a transceiver module. The transceiver module is configured to receive first configuration information from a network device. The first configuration information includes a configuration parameter of X non-cell-defining synchronization signal/physical broadcast channel blocks NCD-SSBs in a first bandwidth part BWP, the X NCD-SSBs have different frequency domain positions, at least one NCD-SSB in the X NCD-SSBs is used for measurement, and X is a positive integer. The transceiver module is further configured to receive, from the network device based on a configuration parameter of at least one NCD-SSB used for measurement in the configuration parameters of the X NCD-SSBs, the at least one NCD-SSB used for measurement.

Optionally, the transceiver module is further configured to receive first indication information from the network device, where the first indication information indicates the at least one NCD-SSB used for measurement in the X NCD-SSBs.

Optionally, the first configuration information may include first indication information, and the first indication information indicates the at least one NCD-SSB used for measurement in the X NCD-SSBs.

In a possible design solution, the communication apparatus in this embodiment of this application further includes a processing module. The processing module is configured to determine, based on the configuration parameters of the X NCD-SSBs and the first indication information, the configuration parameter of the at least one NCD-SSB used for measurement.

In another possible design solution, the communication apparatus in this embodiment of this application further includes a processing module. The processing module is configured to determine, based on the configuration parameters of the X NCD-SSBs and preconfigured information about an NCD-SSB used for measurement, the configuration parameter of the at least one NCD-SSB used for measurement.

Optionally, the configuration parameters of the X NCD-SSBs may include at least one of the following: frequency domain position information, time domain position information, periodicity information, beam information, or transmit power information.

In a possible design solution, the frequency domain position information of the X NCD-SSBs may include frequency domain position information of each NCD-SSB in the X NCD-SSBs relative to a reference resource block, or an absolute radio frequency channel number of the X NCD-SSBs.

In a possible design solution, the time domain position information of the X NCD-SSBs may include position information of each NCD-SSB in the X NCD-SSBs relative to a cell-defining synchronization signal/physical broadcast channel block CD-SSB, or a system frame number and/or a half-frame number of a 1st SSB synchronization burst set of each NCD-SSB in the X NCD-SSBs.

In a possible design solution, the position information of each NCD-SSB in the X NCD-SSBs relative to the CD-SSB may include an offset value of the 1st synchronization burst set of each NCD-SSB in the X NCD-SSBs relative to a 1st synchronization burst set of the CD-SSB.

In a possible design solution, the offset value may include at least one of the following: 5 ms, 10 ms, 15 ms, 20 ms, 40 ms, 60 ms, or 80 ms.

In a possible design solution, the X NCD-SSBs may have different time domain position information.

In a possible design solution, the X NCD-SSBs may have different periodicity information.

In a possible design solution, a value of a periodicity of the X NCD-SSBs may be any one of the following: 320 ms, 640 ms, 1280 ms, or 2560 ms.

In a possible design solution, a beam of the X NCD-SSBs may be the same as beam information of the CD-SSB.

In a possible design solution, the X NCD-SSBs may have same transmit power information.

Optionally, the transceiver module may include a receiving module and a sending module. The sending module is configured to implement a sending function of the communication apparatus according to the sixth aspect, and the receiving module is configured to implement a receiving function of the communication apparatus according to the sixth aspect.

Optionally, the communication apparatus according to the sixth aspect may further include a processing module, and the processing module is configured to implement a processing function of the communication apparatus according to the sixth aspect.

Optionally, the communication apparatus according to the sixth aspect may further include a storage module. The storage module stores a program or instructions. When the processing module executes the program or the instructions, the communication apparatus according to the sixth aspect can perform the method according to the second aspect.

It should be noted that the communication apparatus according to the sixth aspect may be a terminal device, may be a chip (system) or another part or component disposed in the terminal device, or may be an apparatus including the terminal device.

This is not limited in this embodiment of this application.

For technical effects of the communication apparatuses according to the fifth aspect and the sixth aspect, refer to the technical effects of the method according to the first aspect. Details are not described herein again.

According to a seventh aspect, a communication apparatus is provided. The communication apparatus includes a processing module and a transceiver module. The processing module is configured to determine a rate matching pattern. The rate matching pattern includes a time-frequency resource of Y non-cell-defining synchronization signal/physical broadcast channel blocks NCD-SSBs in a first bandwidth part BWP, where the Y NCD-SSBs have different frequency domain positions, and Y is a positive integer. The transceiver module is configured to send a configuration parameter of the rate matching pattern to a terminal device.

Further, the configuration parameter of the rate matching pattern may include a first bitmap and a second bitmap. Each bit in the first bitmap indicates whether an associated time domain symbol belongs to the rate matching pattern, and each bit in the second bitmap indicates whether an associated resource block or resource element belongs to the rate matching pattern.

In a possible design solution, a bit length of the first bitmap is equal to a quantity of time domain symbols in preset duration, where the quantity of time domain symbols in the preset duration is greater than a quantity of time domain symbols in two slots.

Further, a time domain resource indicated by the first bitmap and a frequency domain resource indicated by the second bitmap form a first time-frequency resource pair.

Optionally, the configuration parameter of the rate matching pattern may further include a third bitmap, where each bit in the third bitmap indicates whether an associated first time-frequency resource pair exists.

In a possible design solution, a periodicity of the rate matching pattern is equal to a bit length of the third bitmap.

In a possible design solution, the periodicity of the rate matching pattern is greater than or equal to a maximum periodicity in periodicities corresponding to all of the Y NCD-SSBs.

Optionally, the transceiver module may include a receiving module and a sending module. The sending module is configured to implement a sending function of the communication apparatus according to the seventh aspect, and the receiving module is configured to implement a receiving function of the communication apparatus according to the seventh aspect.

Optionally, the communication apparatus according to the seventh aspect may further include a storage module. The storage module stores a program or instructions. When the processing module executes the program or the instructions, the communication apparatus according to the seventh aspect can perform the method according to the third aspect.

It should be noted that the communication apparatus according to the seventh aspect may be a network device, may be a chip (system) or another part or component disposed in the network device, or may be an apparatus including the network device.

This is not limited in this embodiment of this application.

According to an eighth aspect, a communication apparatus is provided. The communication apparatus includes a processing module and a transceiver module. The transceiver module is configured to receive a configuration parameter of a rate matching pattern from a network device. The rate matching pattern includes a time-frequency resource of Y non-cell-defining synchronization signal/physical broadcast channel blocks NCD-SSBs in a first bandwidth part BWP, where the Y NCD-SSBs have different frequency domain positions, and Y is a positive integer. The processing module is configured to determine the rate matching pattern based on the configuration parameter of the rate matching pattern.

Further, the configuration parameter of the rate matching pattern may include a first bitmap and a second bitmap.

Each bit in the first bitmap indicates whether an associated time domain symbol belongs to the rate matching pattern, and each bit in the second bitmap indicates whether an associated resource block or resource element belongs to the rate matching pattern.

In a possible design solution, a bit length of the first bitmap is equal to a quantity of time domain symbols in preset duration, where the quantity of time domain symbols in the preset duration is greater than a quantity of time domain symbols in two slots.

Further, a time domain resource indicated by the first bitmap and a frequency domain resource indicated by the second bitmap form a first time-frequency resource pair.

Optionally, the configuration parameter of the rate matching pattern may further include a third bitmap, where each bit in the third bitmap indicates whether an associated first time-frequency resource pair exists.

In a possible design solution, a periodicity of the rate matching pattern is equal to a bit length of the third bitmap.

In a possible design solution, the periodicity of the rate matching pattern is greater than or equal to a maximum periodicity in periodicities corresponding to all of the Y NCD-SSBs.

Optionally, the transceiver module may include a receiving module and a sending module. The sending module is configured to implement a sending function of the communication apparatus according to the eighth aspect, and the receiving module is configured to implement a receiving function of the communication apparatus according to the eighth aspect.

Optionally, the communication apparatus according to the eighth aspect may further include a storage module. The storage module stores a program or instructions. When the processing module executes the program or the instructions, the communication apparatus according to the eighth aspect can perform the method according to the fourth aspect.

It should be noted that the communication apparatus according to the eighth aspect may be a terminal device, may be a chip (system) or another part or component disposed in the terminal device, or may be an apparatus including the terminal device.

This is not limited in this embodiment of this application.

For technical effects of the communication apparatuses according to the seventh aspect and the eighth aspect, refer to the technical effects of the method according to the third aspect. Details are not described herein again.

According to a ninth aspect, a communication apparatus is provided. The communication apparatus includes a processor, where the processor is coupled to a memory. The processor is configured to execute a computer program stored in the memory, so that the communication apparatus according to the ninth aspect can perform the method according to any one of the possible implementations of the first aspect to the fourth aspect.

In a possible design solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In embodiments of this application, the communication apparatus according to the ninth aspect may be the network device in the first aspect or the third aspect, the terminal device in the second aspect or the fourth aspect, a chip (system) or another part or component that may be disposed in the network device or the terminal device, or an apparatus including the network device or the terminal device.

For technical effects of the communication apparatus according to the ninth aspect, refer to the technical effects of the method according to any one of the first aspect to the fourth aspect. Details are not described herein again.

According to a tenth aspect, a communication system is provided. The communication system includes a network device and a terminal device. The network device is configured to perform the communication method according to the first aspect or the third aspect, and the terminal device is configured to perform the communication method according to the second aspect or the fourth aspect.

According to an eleventh aspect, a computer-readable storage medium is provided. The computer-readable storage medium stores a computer program or instructions. When the computer program or the instructions are run on a computer, the computer is enabled to perform the method according to any one of the possible implementations of the first aspect to the fourth aspect.

According to a twelfth aspect, a computer program product is provided. The computer program product includes a computer program or instructions. When the computer program or the instructions are run on a computer, the computer is enabled to perform the method according to any one of the possible implementations of the first aspect to the fourth aspect.

## BRIEF DESCRIPTION OF DRAWINGS

FIG. 1 is a diagram of a structure of an SSB time-frequency resource structure according to an embodiment of this application;

FIG. 2 is a diagram of a structure of configuring an SSB by a RedCap UE in a BWP according to an embodiment of this application;

FIG. 3 is a diagram of an architecture of a communication system according to an embodiment of this application;

FIG. 4 is a schematic flowchart of a communication method according to an embodiment of this application;

FIG. 5 is a schematic flowchart of another communication method according to an embodiment of this application;

FIG. 6 is a diagram of a structure of a communication apparatus according to an embodiment of this application; and

FIG. 7 is a diagram of a structure of a communication apparatus according to an embodiment of this application.

## DESCRIPTION OF EMBODIMENTS

(1) BWP

Because there are terminal devices having a plurality of bandwidth capabilities in NR, to support the terminals having different bandwidth capabilities and save power of the terminal devices, a concept of a BWP is introduced. The BWP is a combination of a plurality of consecutive resource blocks (resource blocks, RBs) in one carrier, and includes an uplink BWP and a downlink BWP, respectively used for uplink transmission and downlink transmission. In an initial access phase of a terminal device, a network device configures an initial uplink BWP and an initial downlink BWP for the terminal device. After the terminal device completes initial access and enters a radio resource control (radio resource control, RRC) connected state, the network device additionally configures one or more dedicated uplink BWPs and downlink BWPs for the terminal device. For the plurality of configured BWPs, the terminal device can work on only one BWP at a time, and a BWP used for working may be referred to as an active BWP.

A bandwidth of the BWP cannot exceed a maximum bandwidth of the terminal device. Otherwise, the terminal device cannot access a network. For example, if a maximum bandwidth capability of a reduced capability (reduced capability, RedCap) terminal device is 20 megahertz (megahertz, MHz), a maximum bandwidth of the BWP cannot exceed 20 MHz. Because the terminal device can perform data transmission only within a range of the BWP, most parameters used for data transmission are configured based on the BWP, for example, a physical layer parameter and a higher layer parameter.

(2) SSB

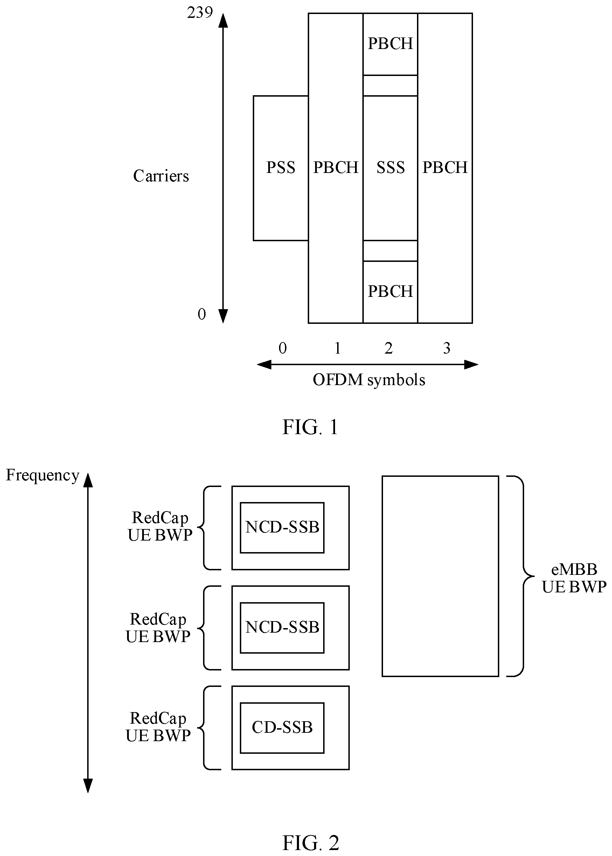

For example, FIG. 1 is a diagram of a structure of an SSB time-frequency resource structure. As shown in FIG. 1, an SSB includes a primary synchronization signal (primary synchronization signal, PSS), a secondary synchronization signal (second synchronization signal, SSS), and a physical broadcast channel (physical broadcast channel, PBCH). One SSB occupies four orthogonal frequency division multiplexing (orthogonal frequency division multiplexing, OFDM) symbols (symbols) in time domain, and occupies 240 subcarriers in frequency domain, namely, 20 physical resource blocks (physical resource blocks, PRBs).

Time-frequency resources in the SSB that are used for the PSS, the SSS, the PBCH, and a demodulation reference signal (demodulation reference signal, DM-RS) are shown in Table 1, where $v = N_{ID}^{cell} \bmod 4$ , and $N_{ID}^{cell}$ is a physical cell identifier (physical cell ID, PCI).

Table 1

| Channel or signal | Start OFDM symbol relative to one SSB | Start carrier relative to one SSB |
|---|---|---|
| PSS | 0 | 56, 57, ..., and 182 |
| SSS | 2 | 56, 57, ..., and 182 |
| Set to zero (set to 0) | 0 | 0, 1, ..., and 55, and 183, 184, ..., and 239 |
|  | 2 | 48, 49, ..., and 55, and 183, 184, ..., and 191 |
| PBCH | 1 and 3 | 0, 1, ..., and 293 |
|  | 2 | 0, 1, ..., and 47 192, 193, ..., and 293 |
| DM-RS for a PBCH | 1 and 3 | 0+v, 4+v, 8+v, ..., and 236+v |
|  | 2 | 0+v, 4+v, 8+v, ..., and 44+v 192+v, 196+v, ..., and 236+v |

With reference to FIG. 1 and Table 1, the PSS occupies 127 subcarriers in the middle of a symbol 0, and the SSS occupies 127 subcarriers in the middle of a symbol 2. To protect the PSS and the SSS, there are different zeroed subcarriers at two ends of each of the PSS and the SSS. The PBCHs are located on a symbol 1, a symbol 3, and the symbol 2, occupy all subcarriers 0 to 239 on the symbol 1 and the symbol 3, and occupy, on the symbol 2, all subcarriers except the subcarriers occupied by the SSS and the zeroed subcarriers used to protect the SSS. The DM-RSs are located on the symbol 1 and the symbol 3, and are located in the middle of the PBCH. Each symbol includes 60 DM-RSs, the DM-RSs are spaced by four subcarriers, and a subcarrier position offset is v.

A plurality of SSBs are defined in one half-frame in time domain. The plurality of SSBs are located at different time domain positions but at a same frequency domain position. The plurality of SSBs form one SSB burst set (burst set). Each SSB in one SSB burst set corresponds to one SSB index (index), and the SSBs are sent in different directions at different moments by using different beams, to cover a cell. One SSB burst set in an entire half-frame may be sent periodically and repeatedly, and a periodicity may be referred to as an SSB burst periodicity. In a cell search phase, the SSB burst periodicity is 20 milliseconds (millisecond, ms) by default, but may alternatively be reconfigured.

In addition, the PBCH in the SSB carries a master information block (master information block, MIB), and an update periodicity of the MIB is 80 ms.

It should be noted that different NR frequency bands support different quantities of SSB beams, in other words, support different quantities of SSBs in one half-frame. For example, an NR frequency band of 3 to 6 gigahertz (gigahertz, GHz) supports a maximum of eight SSB beams; an NR frequency band below 3 GHz supports a maximum of four SSB beams; and an NR frequency band above 6 GHz supports a maximum of 64 SSB beams.

During network access, the terminal device may complete time-frequency synchronization with the network device based on a PSS and an SSS in a received SSB, obtain a PCI, and then obtain broadcast information such as a MIB and timing-related information from a physical layer based on a PBCH.

In addition, the SSB may be further used for channel quality measurement, RRM measurement, RLM measurement, BM measurement, BFD measurement, and the like. For a specific implementation process, refer to an existing related implementation process. Details are not described in embodiments of this application.

Currently, in an NR system, the SSBs are classified into two types: a CD-SSB and an NCD-SSB. Both the CD-SSB and the NCD-SSB may be used for channel quality measurement, RRM measurement, RLM measurement, BM measurement, BFD measurement, and the like. The CD-SSB includes information about a MIB and information about an SIB1, but the NCD-SSB does not include the related information about the SIB1. Therefore, the CD-SSB may further support the terminal device in completing processes such as cell search, camping, and access, but the NCD-SSB cannot support the terminal device in completing the processes such as cell search, camping, and access.

When introduced in Release 15 (Rel-15/R15), the NCD-SSB is used only for measurement in a secondary cell. In Release 17 (Rel-17/R17), the NCD-SSB is further referenced for use in a serving cell, and is mainly used in a scenario in which an active BWP does not include a CD-SSB. In addition, in Rel-17, it is specified that if one BWP does not include a CD-SSB, only one NCD-SSB can be configured.

For example, for a BWP of a RedCap terminal device, because a maximum bandwidth of the RedCap terminal device is 20 MHz, and a bandwidth of the BWP cannot exceed a maximum bandwidth of the terminal device, a maximum bandwidth allocated to the BWP of the RedCap terminal device does not exceed 20 MHz either. Therefore, only one CD-SSB or NCD-SSB can be configured in the BWP. As shown in FIG. 2, if a BWP of a RedCap UE does not include a CD-SSB, only one NCD-SSB can be configured in one BWP. In addition, after the RedCap UE enters an RRC connected (RRC_Connnected) state, a network device may configure parameter information by using RRC dedicated signaling. The parameter information of the NCD-SSB may include information such as a periodicity, a beam, and a time domain position of the NCD-SSB.

For another example, a maximum bandwidth of an enhanced mobile broadband (enhanced mobile broadband, eMBB) terminal device is 100 MHz. A BWP bandwidth configured by the network device for the eMBB terminal device is usually large, for example, 80 MHz or 100 MHz. A BWP range of the eMBB terminal device may cover NCD-SSBs in a plurality of BWPs of a plurality of RedCap UEs, as shown in FIG. 2. It can be learned from this that a BWP of the eMBB terminal device may include more than one NCD-SSB, and how the network device configures an NCD-SSB used for cell measurement in the BWP is unknown.

It can be learned from the foregoing that, when no CD-SSB used for cell measurement is configured in one BWP, the network device may alternatively configure, in the BWP, an NCD-SSB used for cell measurement. However, there is no related solution currently for how the network device configures, in the BWP, the NCD-SSB used for cell measurement.

Therefore, embodiments of this application provide a communication method, to resolve a problem of how a network device configures, in a BWP, an NCD-SSB used for cell measurement.

The following describes the technical solutions in embodiments of this application with reference to the accompanying drawings.

The technical solutions in embodiments of this application may be applied to various communication systems, for example, a machine to machine (machine to machine, M2M) system, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system like a long term evolution (long term evolution, LTE) system or a worldwide interoperability for microwave access (worldwide interoperability for microwave access, WiMAX) communication system, a 5th generation (5th generation, 5G) mobile communication system like a new radio (new radio, NR) system, and a future communication system like a 6th generation (6th generation, 6G) mobile communication system.

All aspects, embodiments, or features are presented in embodiments of this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in embodiments of this application should not be explained as being more preferred or having more advantages than another embodiment or design solution. Exactly, the word "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. "Of (of)", "corresponding (corresponding, relevant)", and "corresponding (corresponding)" may sometimes be interchangeably used. It should be noted that meanings expressed by the terms are consistent when differences of the terms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

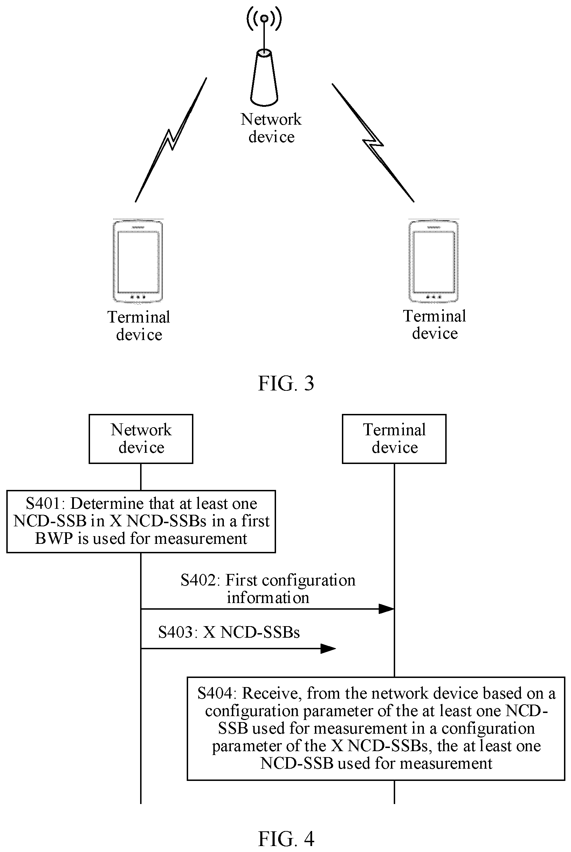

For ease of understanding embodiments of this application, a communication system shown in FIG. 3 is first used as an example to describe in detail a communication system applicable to embodiments of this application. For example, FIG. 3 is a diagram of an architecture of a communication system according to an embodiment of this application.

As shown in FIG. 3, the communication system includes a network device and at least one terminal device. The network device and the terminal device may communicate with each other, and the terminal devices may also communicate with each other. FIG. 3 shows an example of one network device and two terminal devices. A quantity of network devices and a quantity of terminal devices are not limited in this embodiment of this application.

In a possible design solution, the network device determines that at least one non-cell-defining synchronization signal/physical broadcast channel block NCD-SSB in X NCD-SSBs in a first bandwidth part BWP is used for measurement, where the X NCD-SSBs have different frequency domain positions, and X is a positive integer. Further, the network device sends first configuration information to the terminal device, where the first configuration information includes configuration parameters of the X NCD-SSBs. The network device sends the X NCD-SSBs based on the configuration parameters of the X NCD-SSBs. Correspondingly, the terminal device receives the first configuration information from the network device, and receives, from the network device based on a configuration parameter of at least one NCD-SSB used for measurement in the configuration parameters of the X NCD-SSBs, the at least one NCD-SSB used for measurement. For a specific implementation process of this solution, refer to the following method embodiments. Details are not described herein.

In another possible design solution, the network device determines a rate matching pattern, and sends a configuration parameter of the rate matching pattern to the terminal device. The rate matching pattern includes a time-frequency resource of Y non-cell-defining synchronization signal/physical broadcast channel blocks NCD-SSBs in a first bandwidth part BWP, where the Y NCD-SSBs have different frequency domain positions, and Y is a positive integer. Correspondingly, the terminal device receives the configuration parameter of the rate matching pattern from the network device, and determines the rate matching pattern based on the configuration parameter of the rate matching pattern. For a specific implementation process of this solution, refer to the following method embodiments. Details are not described herein.

The network device is a device that is located on a network side of the communication system and that has a wireless transceiver function, or a chip or a chip system that can be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, a transmission point (transmission and reception point, TRP, or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in the 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

The terminal device is a terminal that accesses the communication system and that has a wireless transceiver function, or a chip or a chip system that can be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in embodiments of this application may alternatively be an in-vehicle module, an in-vehicle assembly, an in-vehicle part, an in-vehicle chip, or an in-vehicle unit that is built in a vehicle as one or more parts or units. The vehicle may implement the communication method in embodiments of this application by using the in-vehicle module, the in-vehicle assembly, the in-vehicle part, the in-vehicle chip, or the in-vehicle unit that is built in the vehicle.

It should be noted that, the communication method provided in embodiments of this application is applicable to the terminal device and the network device shown in FIG. 3. For a specific implementation, refer to the following method embodiments. Details are not described herein.

It should be noted that, the solutions in embodiments of this application may alternatively be applied to another communication system, and a corresponding name may alternatively be replaced with a name of a corresponding function in the another communication system.

It should be understood that FIG. 3 is merely a simplified diagram of an example for ease of understanding. The communication system may further include another network device, and/or another terminal device, and/or another communication device including signal sending and receiving modules, which are/is not shown in FIG. 3.

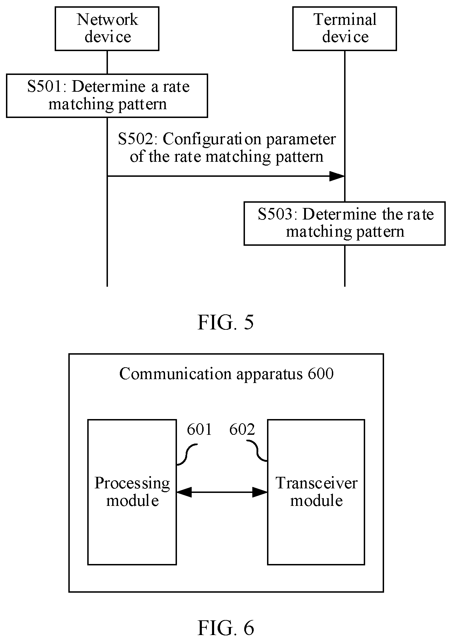

The following describes in detail communication methods provided in embodiments of this application with reference to FIG. 4 and FIG. 5.

For example, FIG. 4 is a schematic flowchart of a communication method according to an embodiment of this application. The communication method may be applicable to the communication system shown in FIG. 3.

As shown in FIG. 4, the communication method includes the following steps.

S401: A network device determines that at least one NCD-SSB in X NCD-SSBs in a first BWP is used for measurement.

The X NCD-SSBs are NCD-SSBs configured by the network device on different frequencies in the first BWP, the X NCD-SSBs have different frequency domain positions, and X is a positive integer.

It should be noted that when X=1, to be specific, the first BWP includes only one NCD-SSB, the network device may indicate, without selection, that the configured one NCD-SSB is used for measurement. In this case, the configuration parameter in the following S402 and S403 may also include parameter information of only the one NCD-SSB.

That the at least one NCD-SSB is used for measurement may be understood as that the network device may configure more than one NCD-SSB for a terminal device to perform measurement. It may alternatively be understood as that the plurality of NCD-SSBs may include at least one NCD-SSB used for measurement. The measurement may be channel quality measurement, time-frequency synchronization detection, radio link failure measurement, RRM measurement, RLM measurement, BM measurement, BFD measurement, or the like.

The first BWP may be an active BWP configured by the network device for the terminal device. The terminal device may receive an NCD-SSB, a physical downlink control channel (physical downlink control channel, PDCCH), a physical downlink shared channel (physical downlink shared channel, PDSCH), a channel state information-reference signal (channel state information-reference signal, CSI-RS), and the like based on the active BWP, or may send a channel sounding signal (sounding reference signal, SRS), a physical uplink control channel (physical uplink control channel, PUCCH), a physical uplink shared channel (physical uplink shared channel, PUSCH), and the like based on the active BWP.

For example, the network device may configure X NCD-SSBs on different frequencies in the first BWP, and the network device may select, according to a predefined rule, one or more NCD-SSBs from the X NCD-SSBs for measurement. The predefined rule may be defined in a protocol, or may be determined by the network device and the terminal device through negotiation. This is not limited in this embodiment of this application.

It may be understood that different NCD-SSBs may partially overlap, but frequencies of the NCD-SSBs are different.

It should be noted that all the X NCD-SSBs configured in the first BWP need to be used for rate matching, in other words, a time-frequency resource occupied by the NCD-SSB cannot be used for a PDSCH. If the PDSCH collides with or overlaps the NCD-SSB, the terminal device needs to assume that no PDSCH is transmitted on the time-frequency resource occupied by the NCD-SSB.

S402: The network device sends first configuration information to the terminal device. Correspondingly, the terminal device receives the first configuration information from the network device.

The first configuration information may include configuration parameters of the X NCD-SSBs. The configuration parameters of the X NCD-SSBs may include at least one of the following: frequency domain position information, time domain position information, periodicity information, beam information, or transmit power information.

It may be understood that, the configuration parameters of the X NCD-SSBs may further include an identifier of the X NCD-SSBs. One identifier may correspond to an NCD-SSB on one frequency, and the identifier may be in a form of a frequency number, an index, or the like. For example, if X=4, frequency numbers f0 to f3 respectively correspond to NCD-SSBs on four frequency points. Any identifier type or identification manner that can be used to identify different NCD-SSBs is applicable to this embodiment of this application. This is not specifically limited in this embodiment of this application.

The frequency domain position information may include frequency domain position information of each NCD-SSB in the X NCD-SSBs relative to a reference resource block, or an absolute radio frequency channel number (absolute radio frequency channel number, ARFCN) (carrier frequency number) of the X NCD-SSBs. The reference resource block may be a common resource block RB0. Any NCD-SSB in the X NCD-SSBs may be located on a synchronization raster, or may not be located on the synchronization raster. This is not specifically limited in this embodiment of this application.

The time domain position information may include position information of each NCD-SSB in the X NCD-SSBs relative to a CD-SSB, or a system frame number and/or a half-frame number of a $1^{st}$ SSB synchronization burst set of each NCD-SSB in the X NCD-SSBs. The position information of each NCD-SSB in the X NCD-SSBs relative to the CD-SSB may be an offset value of the $1^{st}$ synchronization burst set of each NCD-SSB in the X NCD-SSBs relative to a $1^{st}$ synchronization burst set of the CD-SSB.

The offset value may be set at a granularity of 5 ms, and a candidate value may be any one of 0 ms, 5 ms, 10 ms, 15 ms, 20 ms, ..., and 150 ms. Further, the offset value may include any one of the following: 5 ms, 10 ms, 15 ms, 20 ms, 40 ms, 60 ms and 80 ms. When the offset value is 20 ms, 40 ms, 60 ms, or 80 ms, the CD-SSB and the NCD-SSB(s) may not be located in the same 20 ms. This reduces impact of introduction of the NCD-SSB on an existing system time sequence, and reduces complexity of the network device. Offset values corresponding to different NCD-SSBs may be different or may be the same. This is not specifically limited in this embodiment of this application.

It may be understood that, the CD-SSB is obtained in a process in which the terminal device performs cell search and access, and each cell has only one specific CD-SSB.

In a possible design solution, the X NCD-SSBs may have different time domain position information. In other words, the network device may separately configure a different time domain position for each NCD-SSB in the X NCD-SSBs. The time domain position information includes X pieces of time domain position information, and one piece of time domain position information corresponds to one NCD-SSB.

In another possible design solution, the X NCD-SSBs may have same time domain position information. In other words, the X NCD-SSBs are located at a same time domain position. The time domain position information may include time domain position information of only one NCD-SSB, and the X NCD-SSBs share the same time domain position information. It may alternatively be understood as: The time domain position information still includes X pieces of time domain position information, but the X pieces of time domain position information are the same.

It should be noted that time domain positions of the X NCD-SSBs may alternatively be partially the same and partially different. This is not specifically limited in this embodiment of this application.

The periodicity information may include a periodicity of repeated transmission of the X NCD-SSBs. For NCD-SSBs on different frequencies, the network device sends the NCD-SSBs in a form of burst sets. Therefore, the periodicity information may alternatively be understood as a periodicity of sending an NCD-SSB burst set on one frequency. A value of a periodicity of each NCD-SSB in the X NCD-SSBs may be any one of 5 ms, 10 ms, 20 ms, 40 ms, 80 ms, or 160 ms.

Further, to reduce resource overheads of the NCD-SSB and improve resource utilization, the periodicity of each NCD-SSB in the X NCD-SSBs may be any one of 320 ms, 640 ms, 1280 ms, or 2560 ms.

In a possible design solution, the X NCD-SSBs may have different periodicity information. In other words, the network device may configure different periodicities for different NCD-SSBs. In other words, the periodicity information includes X pieces of periodicity information, and one piece of periodicity information corresponds to one NCD-SSB.

In another possible design solution, the X NCD-SSBs may have same periodicity information. In other words, the periodicity information may include periodicity information of only one NCD-SSB, and the X NCD-SSBs share the same periodicity information. It may be understood that the periodicity information still includes X pieces of periodicity information, and the X pieces of periodicity information are the same.

In still another possible design solution, the periodicity information may include periodicity information of some of the X NCD-SSBs, and the periodicity information of the NCD-SSBs may be the same or may be different. For an NCD-SSB configured with no periodicity information in the X NCD-SSBs, it may be considered that periodicity information of the NCD-SSB is the same as periodicity information of the CD-SSB.

The beam information may include beam information of the X NCD-SSBs. NCD-SSBs on different frequencies are sent in a form of burst sets through beam sweeping. One burst set includes a plurality of NCD-SSBs on a same frequency, and each NCD-SSB in the burst set corresponds to one SSB index. For example, one burst set includes eight NCD-SSBs on a same frequency, SSB indexes corresponding to the eight NCD-SSBs on the same frequency are 0 to 7, and the eight SSBs on the same frequency are sent in different directions at different moments by using beams. Therefore, the beam information may include a quantity of swept beams, a beam transmit direction, a beam width, and the like of each NCD-SSB in the X NCD-SSBs.

In a possible design solution, the X NCD-SSBs may have the same beam information. Optionally, the beam information of the X NCD-SSBs is the same as beam information of the CD-SSB, and a CD-SSB and an NCD-SSB that have a same SSB index are quasi co-located (quasi co-located, QCL). For example, in an NCD-SSB burst set whose frequency is f0, beam information of an NCD-SSB whose SSB index is 1 is the same as beam information of a CD-SSB whose SSB index is 1, and the NCD-SSB whose SSB index is 1 and the CD-SSB whose SSB index is 1 are QCL.

QCL may indicate a relationship between two ports or a relationship between two signals. If two signals from two ports are QCL, the signals from the two ports have some same attributes. The attributes may include an average gain, a spatial receive parameter, a Doppler frequency shift, a delay spread, and the like.

The transmit power information may include at least one of SSS transmit power, PSS transmit power, PBCH transmit power, or PBCH DMRS transmit power of each NCD-SSB in the X NCD-SSBs. For example, the transmit power information includes only the SSS transmit power and the PSS transmit power of each NCD-SSB in the X NCD-SSBs. Alternatively, the transmit power information includes the SSS transmit power, the PBCH transmit power, and the PBCH DMRS transmit power of each NCD-SSB in the X NCD-SSBs.

In a possible design solution, the X NCD-SSBs may have same transmit power information. The transmit power information may include transmit power information of only one NCD-SSB, and the X NCD-SSBs use the same transmit power information. It may alternatively be understood as: The transmit power information still includes X pieces of transmit power information, and the X pieces of transmit power information are the same.

Optionally, transmit power of the X NCD-SSBs may be the same as transmit power of the CD-SSB. In this case, the configuration parameters of the X NCD-SSBs may not include the transmit power information, and the transmit power information of the X NCD-SSBs is the same as transmit power information of the CD-SSB by default.

In another possible design solution, the X NCD-SSBs may have different transmit power information. The transmit power information includes X pieces of transmit power information, and one piece of transmit power information corresponds to one NCD-SSB. It may be understood that different transmit power information may be different types of transmit power, may be different values of transmit power, or may be different types and values of transmit power. This is not specifically limited in this embodiment of this application.

Optionally, the first configuration information may further include first indication information. The first indication information may indicate the at least one NCD-SSB used for measurement in the X NCD-SSBs. For example, the first indication information may include a frequency number or an index of the NCD-SSB used for measurement.

Optionally, the first configuration information may be carried in RRC signaling, media access control (media access control, MAC) signaling, a SIB, or downlink control information (downlink control information, DCI) for sending.

In a possible design solution, the first indication information and the first configuration information may be separately sent. Optionally, the network device may send the first indication information to the terminal device. Correspondingly, the terminal device receives the first indication information from the network device.

Optionally, the first indication information may also be carried in the RRC signaling, the media access control (media access control, MAC) signaling, the SIB, or the downlink control information (downlink control information, DCI) for sending.

Further, after receiving the configuration parameters of the X NCD-SSBs, the terminal device may determine, based on the configuration parameters of the X NCD-SSBs, specific time-frequency resources on which an NCD-SSB exists, to perform rate matching on a PDSCH whose time-frequency resource overlaps the time-frequency resources of the X NCD-SSBs. In addition, the terminal device may further receive, based on the configuration parameters of the X NCD-SSBs, the at least one NCD-SSB used for measurement. For a specific process, refer to related descriptions in the following S404.

S403: The network device sends the X NCD-SSBs based on the configuration parameters of the X NCD-SSBs.

The X NCD-SSBs include at least one NCD-SSB used for measurement. The network device may send, based on the configuration parameters of the X NCD-SSBs, the X NCD-SSBs on a specified time-frequency resource in a beam sweeping manner.

S404: The terminal device receives, from the network device based on a configuration parameter of at least one NCD-SSB used for measurement in the configuration parameters of the X NCD-SSBs, the at least one NCD-SSB used for measurement.

It should be noted that the terminal device may not receive an NCD-SSB that is not used for measurement. In other words, the terminal device may not measure the NCD-SSB that is not used for measurement. For another NCD-SSB that is not received and measured by the terminal device, when receiving a PDSCH, the terminal device may perform rate matching based on a configuration parameter of the another NCD-SSB. If the NCD-SSB collides with or conflicts with the PDSCH, in other words, a time-frequency resource of the NCD-SSB overlaps a time-frequency resource of the PDSCH, the terminal device assumes that no PDSCH is transmitted on the time-frequency resource of the NCD-SSB.

When the first configuration information includes the first indication information or the network device separately sends the first indication information, the terminal device may determine, based on the configuration parameters of the X NCD-SSBs and the first indication information, the configuration parameter of the at least one NCD-SSB used for measurement, and then receive, from the network device based on the determined configuration parameter of the at least one NCD-SSB used for measurement, the at least one NCD-SSB used for measurement. For example, the terminal device determines, from the configuration parameters of the X NCD-SSBs based on the first indication information, a configuration parameter of one or more NCD-SSBs used for measurement, and then receives, based on the configuration parameter of the one or more NCD-SSBs used for measurement, the one or more NCD-SSBs used for measurement.

When there is no first indication information, the terminal device may determine, from the configuration parameters of the X NCD-SSBs based on preconfigured information about at least one NCD-SSB used for measurement, the configuration parameter of the at least one NCD-SSB used for measurement, and then receive, based on the determined configuration parameter of the at least one NCD-SSB used for measurement, the one or more NCD-SSBs used for measurement. The preconfigured information about the at least one NCD-SSB used for measurement may be a frequency number, an index, and the like of a specified NCD-SSB. Alternatively, the first one or several NCD-SSBs in the X NCD-SSBs are used for measurement by default. The preconfigured information about the at least one NCD-SSB used for measurement may be predefined in the protocol, or may be determined by the network device and the terminal device through negotiation in advance. This is not specifically limited in this embodiment of this application.

Further, after receiving the at least one NCD-SSB used for measurement, the terminal device performs measurement by using the at least one NCD-SSB. For example, the terminal device obtains a PBCH and an SSS based on each NCD-SSB used for measurement, and performs RRM measurement based on the SSS and a PBCH DM-RS.

In a possible implementation, the terminal device may separately measure a plurality of received NCD-SSBs used for measurement, and send, to the network device, a measurement result obtained by measuring each NCD-SSB used for measurement, or perform joint processing, for example, weighted averaging, on a measurement result obtained by measuring each NCD-SSB used for measurement, to obtain a joint measurement result, and then send the joint measurement result to the network device.

In a possible implementation, the terminal device may alternatively receive the X NCD-SSBs from the network device based on the configuration parameters of the X NCD-SSBs. The terminal device may discard a received NCD-SSB that is not used for measurement, and do not perform measurement.

Based on the communication method shown in FIG. 4, the network device may configure one or more NCD-SSBs in one BWP, and may configure at least one NCD-SSB used for measurement when configuring the plurality of NCD-SSBs. In this way, a measurement problem of the terminal device when there is no CD-SSB in one BWP can be resolved, and an NCD-SSB configuration in the BWP is more flexible, so that resource utilization can be improved. In addition, the network device may further send a configuration parameter of the plurality of configured NCD-SSBs to the terminal device. In this way, a problem of how the terminal device performs rate matching when a plurality of NCD-SSBs are configured in one BWP can be further resolved, impact on PDSCH demodulation can be avoided, and data transmission efficiency can be improved.

In the foregoing embodiment, the network device may configure more than one NCD-SSB in one BWP for measurement. In addition, the problem of how the terminal device performs rate matching when a plurality of NCD-SSBs are configured in one BWP is implemented by the network device by sending the configuration parameter of the plurality of NCD-SSBs to the terminal device in the foregoing embodiment.

However, when the network device can configure only one NCD-SSB used for measurement and configures another NCD-SSB in the BWP, the terminal device cannot learn of the another NCD-SSB configured by the network device in the BWP. Consequently, rate matching performed by the terminal device fails. Therefore, the network device may indicate, in a transparent manner, the terminal device how to perform rate matching. It should be noted that, in this case, the terminal device may receive only one NCD-SSB used for measurement.

For example, FIG. 5 shows another communication method according to an embodiment of this application. As shown in FIG. 5, the communication method includes the following steps.

S501: A network device determines a rate matching pattern.

The rate matching pattern includes a time-frequency resource of Y NCD-SSBs in a first BWP, where the Y NCD-SSBs have different frequency domain positions, and Y is a positive integer. For specific descriptions of the first BWP and the Y NCD-SSBs, refer to related descriptions in the foregoing S401. Details are not described herein again.

For example, the network device may determine the rate matching pattern based on how to configure one or more NCD-SSBs in the first BWP. In addition, the network device may perform uplink resource mapping and downlink resource mapping based on the determined rate matching pattern. For example, the network device determines, based on the rate matching pattern, a resource used to send a PUSCH, or a resource used to send a PDSCH, to resolve a problem that a PDSCH resource or a PUSCH resource overlaps or collides with resources of a plurality of NCD-SSBs configured in the first BWP.

It should be noted that, a difference between the Y NCD-SSBs and the X NCD-SSBs lies in that the Y NCD-SSBs may all be used only for rate matching, and do not include an NCD-SSB used for measurement.

S502: The network device sends a configuration parameter of the rate matching pattern to a terminal device. Correspondingly, the terminal device receives the configuration parameter of the rate matching pattern from the network device.

The configuration parameter of the rate matching pattern may include a configuration parameter indicating a time domain resource and a configuration parameter indicating a frequency domain resource. The configuration parameter of the rate matching pattern may be carried in signaling such as RRC signaling and MAC signaling for sending.

For example, the configuration parameter indicating the time domain resource may be indicated by a first bitmap (bitmap), and the configuration parameter indicating the frequency domain resource may be indicated by a second bitmap. In other words, the rate matching pattern may include the first bitmap and the second bitmap.

Each bit in the first bitmap indicates whether an associated time domain symbol belongs to the rate matching pattern. A length of the first bitmap is equal to a quantity of time domain symbols in preset duration, and the quantity of time domain symbols in the preset duration is greater than a quantity of time domain symbols in two slots, so that accuracy of the rate matching pattern can be improved. The length of the first bitmap is a quantity of bits in the first bitmap. A quantity of symbols varies with a subcarrier spacing (subcarrier spacing, SCS). Therefore, the quantity of bits in the first bitmap is related to the SCS. For example, the preset duration is 2 ms (two subframes). When the SCS is 30 kHz, the two subframes include 56 symbols (symbols), and the length of the first bitmap is 56. When the SCS is 15 kHz, the two subframes include 28 symbols, and the length of the first bitmap is 28 bits.

For example, when the preset duration is 2 ms and the SCS is 15 kHz, the length of the first bitmap is 28, and the 28 bits in the first bitmap respectively correspond to 28 symbols in 2 ms. When a bit in the first bitmap is 1, it indicates that a time domain symbol corresponding to or associated with the bit belongs to the time domain resource of the rate matching pattern. When a bit is 0, it indicates that a time domain symbol corresponding to or associated with the bit does not belong to the time domain resource of the rate matching pattern.

Each bit in the second bitmap indicates whether an associated resource block or resource element belongs to the rate matching pattern. A length of the second bitmap is equal to a quantity of associated resource blocks or resource elements. For example, if a quantity of RBs indicated by the second bitmap is 20, the length of the second bitmap is 20 bits. When a bit in the second bitmap is 1, it indicates that an RB corresponding to or associated with the bit belongs to the frequency domain resource of the rate matching pattern. When a bit is 0, it indicates that an RB corresponding to or associated with the bit does not belong to the frequency domain resource of the rate matching pattern.

It may be understood that the length of the second bitmap cannot exceed a quantity of RBs included in the BWP.

The time domain resource indicated by the first bitmap and the frequency domain resource indicated by the second bitmap form a first time-frequency resource pair. For example, if the preset duration is 2 ms, the first time-frequency resource pair represents a time-frequency resource of a rate matching pattern in 2 ms.

Optionally, the configuration parameter of the rate matching pattern may include a plurality of second bitmaps, frequency domain resources indicated by the plurality of second bitmaps are different, and a frequency domain resource indicated by each second bitmap and the time domain resource indicated by the first bitmap may form one first time-frequency resource pair, to form a plurality of first time-frequency resource pairs.

Optionally, the configuration parameter of the rate matching pattern may further include a third bitmap, where each bit in the third bitmap indicates whether an associated first time-frequency resource pair exists. For example, when a bit in the third bitmap is 1, it indicates that a first time-frequency resource pair corresponding to or associated with the bit exists. When a bit is 0, it indicates that a first time-frequency resource pair corresponding to or associated with the bit does not exist.

A length of the third bitmap may indicate a repetition periodicity of the rate matching pattern, and the length of the third bitmap is equal to the periodicity of the rate matching pattern. A value of the periodicity of the rate matching pattern may be {1 ms, 2 ms, 4 ms, 5 ms, 8 ms, 10 ms, 20 ms, 40 ms, 80 ms}.

Optionally, the periodicity of the rate matching pattern is greater than or equal to a maximum periodicity in periodicities corresponding to all of the Y NCD-SSBs. For example, if the maximum periodicity of the NCD-SSB is 160 ms, the periodicity of the rate matching pattern may be greater than or equal to 160 ms. A rate matching pattern with a longer maximum periodicity is more accurate.

Optionally, a plurality of third bitmaps may be configured, and each third bitmap may correspond to one first time-frequency resource pair.

S503: The terminal device determines the rate matching pattern based on the configuration parameter of the rate matching pattern.

For example, the terminal device may construct the rate matching pattern based on the received configuration parameter of the rate matching pattern, and further determine a time-frequency resource of the PDSCH based on the rate matching pattern.

Based on the communication method shown in FIG. 5, when configuring a plurality of NCD-SSBs in one BWP, the network device may send the configuration parameter of the rate matching pattern to the terminal device, and cover, by using the rate matching pattern, a time-frequency resource of one or more NCD-SSBs configured in the BWP, without sending a configuration parameter of the plurality of NCD-SSBs to the terminal device. This is transparent to the terminal device, so that calculation complexity of the terminal device can be reduced, and a calculation rate of the terminal device can be improved.

In addition, after configuring an SSB, the network device may notify another network device of related information about the SSB configured by the network device. In a current protocol, network devices may transfer a CD-SSB and an NCD-SSB of a serving cell through an Xn interface by using basic information of the serving cell (Served Cell Information NR IE) carried in an Xn setup request message (XN SETUP REQUEST message) or an Xn setup response message (XN SETUP RESPONSE message). The NCD-SSB is mainly used by the terminal device to perform carrier aggregation (carrier aggregation, CA)/dual-connectivity (dual-connectivity, DC) related measurement. The network device may distinguish between a configuration of a CD-SSB and a configuration of an NCD-SSB of a neighboring station based on the received Served Cell Information NR IE, to perform related configuration.

The Served Cell Information NR IE includes a measurement timing configuration (Measurement Timing Configuration) field. In the 38.331 protocol, MeasTimingList in the Measurement Timing Configuration field may include configuration information of frequencies of one or more SSBs, for example, a frequency (ARFCN), an SCS, a synchronization signal/physical broadcast channel block measurement timing configuration (ss/pbch block measurement timing configuration, SMTC), and an SSB-received signal strength indication (SSB-received signal strength indication, SS-RSSI) measurement configuration. Further, campOnFirstSSB in the Measurement Timing Configuration indicates a frequency of a first SSB in the MeasTimingList. The first SSB is an SSB used for camping and PCell configuration, that is, the CD-SSB, and SSBs of other frequencies are NCD-SSBs.

A RedCap terminal device does not support a CA/DC-related operation, but the RedCap terminal device may perform serving cell measurement based on a corresponding SSB in an active BWP, that is, an NCD-SSB measurement configuration indicated by a serving cell measurement object (servingCellMO) in a BWP-dedicated configuration.

Therefore, for a cell that supports RedCap, in addition to being used by a common NR terminal device to perform CA or DC related measurement configuration, the NCD-SSB may be further used by a RedCap terminal device to perform serving cell measurement and serve as an intra-frequency reference point. Therefore, similar to a purpose of distinguishing between the CD-SSB and the NCD-SSB, for a cell/base station that supports RedCap, a sent XN SETUP REQUEST message or XN SETUP RESPONSE message includes a RedCap broadcast information (RedCap Broadcast Information) field, where the field indicates that the cell can support a RedCap terminal device and whether the cell forbids access of a RedCap 1R/2R terminal device. In this case, the network device may further distinguish between specific SSBs that are in NCD-SSBs supported by the cell and that are dedicated SSBs of the RedCap terminal device or NCD-SSBs used by the RedCap terminal device for measurement.

In a possible design solution, the Measurement Timing Configuration includes information about a list with a length equal to that of the MeasTimingList, and each element in the list indicates whether an NCD-SSB is an NCD-SSB of the RedCap terminal device, or indicates specific NCD-SSBs in remaining NCD-SSBs other than a first element (CD-SSB) are NCD-SSBs of the RedCap device.

In another possible design solution, each MeasTiming in the MeasTimingList includes one piece of indication information indicating whether an SSB included in the MeasTiming is an NCD-SSB of the RedCap device. The indication information may be added in an extended manner.

It may be understood that, in the foregoing embodiments, the methods and/or the steps implemented by the network device may alternatively be implemented by a part (for example, a processor, a chip, a chip system, a circuit, a logical module, or software) that can be used in the network device, and the methods and/or the steps implemented by the terminal device may alternatively be implemented by a part (for example, a processor, a chip, a chip system, a circuit, a logical module, or software) that can be used in the terminal device.

The foregoing mainly describes the solutions provided in embodiments of this application. Correspondingly, an embodiment of this application further provides a communication apparatus. The communication apparatus is configured to implement the methods in the foregoing method embodiments. The communication apparatus may be the network device in the foregoing method embodiments, an apparatus including the network device, or a part that can be used in the network device, for example, a chip or a chip system. Alternatively, the communication apparatus may be the terminal device in the foregoing method embodiments, an apparatus including the terminal device, or a part that can be used in the terminal device, for example, a chip or a chip system.

It may be understood that, to implement the foregoing functions, the communication apparatus includes corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For example, the communication apparatus is the terminal device or the network device in the foregoing method embodiments. FIG. 6 is a diagram of a structure of a communication apparatus according to an embodiment of this application. As shown in FIG. 6, the communication apparatus 600 includes a processing module 601 and a transceiver module 602.

For example, the communication apparatus 600 is the network device in the foregoing method embodiments.

In some embodiments, the processing module 601 is configured to determine that at least one non-cell-defining synchronization signal/physical broadcast channel block NCD-SSB in X NCD-SSBs in a first bandwidth part BWP is used for measurement. The X NCD-SSBs have different frequency domain positions, and X is a positive integer.

The transceiver module 602 is configured to send first configuration information to a terminal device. The first configuration information includes configuration parameters of the X NCD-SSBs.

The transceiver module 602 is further configured to send the X NCD-SSBs based on the configuration parameters of the X NCD-SSBs. The X NCD-SSBs include at least one NCD-SSB used for measurement.

Optionally, the transceiver module is further configured to send first indication information to the terminal device. The first indication information indicates the at least one NCD-SSB used for measurement in the X NCD-SSBs.

Optionally, the first configuration information may further include first indication information, and the first indication information indicates the at least one NCD-SSB used for measurement in the X NCD-SSBs.

Optionally, the configuration parameters of the X NCD-SSBs may include at least one of the following: frequency domain position information, time domain position information, periodicity information, beam information, or transmit power information.

In a possible design solution, the frequency domain position information of the X NCD-SSBs may include frequency domain position information of each NCD-SSB in the X NCD-SSBs relative to a reference resource block, or an absolute radio frequency channel number of the X NCD-SSBs.

In a possible design solution, the time domain position information of the X NCD-SSBs may include position information of each NCD-SSB in the X NCD-SSBs relative to a cell-defining synchronization signal/physical broadcast channel block CD-SSB, or a system frame number and/or a half-frame number of a 1st SSB synchronization burst set of each NCD-SSB in the X NCD-SSBs.

In a possible design solution, the position information of each NCD-SSB in the X NCD-SSBs relative to the CD-SSB may include an offset value of the 1st synchronization burst set of each NCD-SSB in the X NCD-SSBs relative to a 1st synchronization burst set of the CD-SSB.

In a possible design solution, the offset value may include at least one of the following: 5 ms, 10 ms, 15 ms, 20 ms, 40 ms, 60 ms, or 80 ms.

In a possible design solution, the X NCD-SSBs may have different time domain position information.

In a possible design solution, the X NCD-SSBs may have different periodicity information.

In a possible design solution, a value of a periodicity of the X NCD-SSBs may be any one of the following: 320 ms, 640 ms, 1280 ms, or 2560 ms.

In a possible design solution, a beam of the X NCD-SSBs may be the same as beam information of the CD-SSB.

In a possible design solution, the X NCD-SSBs may have same transmit power information.

In some other embodiments, the processing module 601 is configured to determine a rate matching pattern. The rate matching pattern includes a time-frequency resource of Y non-cell-defining synchronization signal/physical broadcast channel blocks NCD-SSBs in a first bandwidth part BWP, where the Y NCD-SSBs have different frequency domain positions, and Y is a positive integer.

The transceiver module 602 is configured to send a configuration parameter of the rate matching pattern to a terminal device.

Further, the configuration parameter of the rate matching pattern may include a first bitmap and a second bitmap.

Each bit in the first bitmap indicates whether an associated time domain symbol belongs to the rate matching pattern, and each bit in the second bitmap indicates whether an associated resource block or resource element belongs to the rate matching pattern.

In a possible design solution, a bit length of the first bitmap is equal to a quantity of time domain symbols in preset duration, where the quantity of time domain symbols in the preset duration is greater than a quantity of time domain symbols in two slots.

Further, a time domain resource indicated by the first bitmap and a frequency domain resource indicated by the second bitmap form a first time-frequency resource pair.

Optionally, the configuration parameter of the rate matching pattern may further include a third bitmap, where each bit in the third bitmap indicates whether an associated first time-frequency resource pair exists.

In a possible design solution, a periodicity of the rate matching pattern is equal to a bit length of the third bitmap.

In a possible design solution, the periodicity of the rate matching pattern is greater than or equal to a maximum periodicity in periodicities corresponding to all of the Y NCD-SSBs.

For example, the communication apparatus 600 is the terminal device in the foregoing method embodiments.

In some embodiments, the transceiver module 602 is configured to receive first configuration information from a network device. The first configuration information includes a configuration parameter of X non-cell-defining synchronization signal/physical broadcast channel blocks NCD-SSBs in a first bandwidth part BWP, the X NCD-SSBs have different frequency domain positions, at least one NCD-SSB in the X NCD-SSBs is used for measurement, and X is a positive integer.

The transceiver module 602 is further configured to receive, from the network device based on a configuration parameter of at least one NCD-SSB used for measurement in the configuration parameters of the X NCD-SSBs, the at least one NCD-SSB used for measurement.

Optionally, the transceiver module 602 is further configured to receive first indication information from the network device, where the first indication information indicates the at least one NCD-SSB used for measurement in the X NCD-SSBs.

Optionally, the first configuration information may include first indication information, and the first indication information indicates the at least one NCD-SSB used for measurement in the X NCD-SSBs.

In a possible design solution, the processing module 601 is configured to determine, based on the configuration parameters of the X NCD-SSBs and the first indication information, the configuration parameter of the at least one NCD-SSB used for measurement.

In another possible design solution, the processing module 601 is configured to determine, based on the configuration parameters of the X NCD-SSBs and preconfigured information about an NCD-SSB used for measurement, the configuration parameter of the at least one NCD-SSB used for measurement.

Optionally, the configuration parameters of the X NCD-SSBs may include at least one of the following: frequency domain position information, time domain position information, periodicity information, beam information, or transmit power information.

In a possible design solution, the frequency domain position information of the X NCD-SSBs may include frequency domain position information of each NCD-SSB in the X NCD-SSBs relative to a reference resource block, or an absolute radio frequency channel number of the X NCD-SSBs.

In a possible design solution, the time domain position information of the X NCD-SSBs may include position information of each NCD-SSB in the X NCD-SSBs relative to a cell-defining synchronization signal/physical broadcast channel block CD-SSB, or a system frame number and/or a half-frame number of a 1st SSB synchronization burst set of each NCD-SSB in the X NCD-SSBs.

In a possible design solution, the position information of each NCD-SSB in the X NCD-SSBs relative to the CD-SSB may include an offset value of the 1st synchronization burst set of each NCD-SSB in the X NCD-SSBs relative to a 1st synchronization burst set of the CD-SSB.

In a possible design solution, the offset value may include at least one of the following: 5 ms, 10 ms, 15 ms, 20 ms, 40 ms, 60 ms, or 80 ms.

In a possible design solution, the X NCD-SSBs may have different time domain position information.

In a possible design solution, the X NCD-SSBs may have different periodicity information.

In a possible design solution, a value of a periodicity of the X NCD-SSBs may be any one of the following: 320 ms, 640 ms, 1280 ms, or 2560 ms.

In a possible design solution, a beam of the X NCD-SSBs may be the same as beam information of the CD-SSB.

In a possible design solution, the X NCD-SSBs may have same transmit power information.

In some other embodiments, the transceiver module 602 is configured to receive a configuration parameter of a rate matching pattern from a network device. The rate matching pattern includes a time-frequency resource of Y non-cell-defining synchronization signal/physical broadcast channel blocks NCD-SSBs in a first bandwidth part BWP, where the Y NCD-SSBs have different frequency domain positions, and Y is a positive integer.

The processing module 601 is configured to determine the rate matching pattern based on the configuration parameter of the rate matching pattern.

Further, the configuration parameter of the rate matching pattern may include a first bitmap and a second bitmap. Each bit in the first bitmap indicates whether an associated time domain symbol belongs to the rate matching pattern, and each bit in the second bitmap indicates whether an associated resource block or resource element belongs to the rate matching pattern.

In a possible design solution, a bit length of the first bitmap is equal to a quantity of time domain symbols in preset duration, where the quantity of time domain symbols in the preset duration is greater than a quantity of time domain symbols in two slots.

Further, a time domain resource indicated by the first bitmap and a frequency domain resource indicated by the second bitmap form a first time-frequency resource pair.

Optionally, the configuration parameter of the rate matching pattern may further include a third bitmap, where each bit in the third bitmap indicates whether an associated first time-frequency resource pair exists.

In a possible design solution, a periodicity of the rate matching pattern is equal to a bit length of the third bitmap.

In a possible design solution, the periodicity of the rate matching pattern is greater than or equal to a maximum periodicity in periodicities corresponding to all of the Y NCD-SSBs.

Optionally, in this embodiment of this application, the transceiver module 602 may include a receiving module and a sending module (not shown in FIG. 6). The transceiver module is configured to implement a sending function and a receiving function of the communication apparatus 600.

Optionally, the communication apparatus 600 may further include a storage module (not shown in FIG. 6). The storage module stores a program or instructions. When the processing module 601 executes the program or the instructions, the communication apparatus 600 can perform the function of the network device or the terminal device in the communication method shown in FIG. 4 or FIG. 5.

It should be understood that the processing module 601 in the communication apparatus 600 may be implemented by a processor or a processor-related circuit component, and may be a processor or a processing unit. The transceiver module 602 may be implemented by a transceiver or a transceiver-related circuit component, and may be a transceiver or a transceiver unit.

All related content of the steps in the foregoing method embodiments may be cited in function descriptions of the corresponding functional modules. Details are not described herein again.

The communication apparatus 600 provided in this embodiment may perform the foregoing communication methods. Therefore, for technical effects that can be achieved by the communication apparatus 600, refer to the foregoing method embodiments. Details are not described herein again.

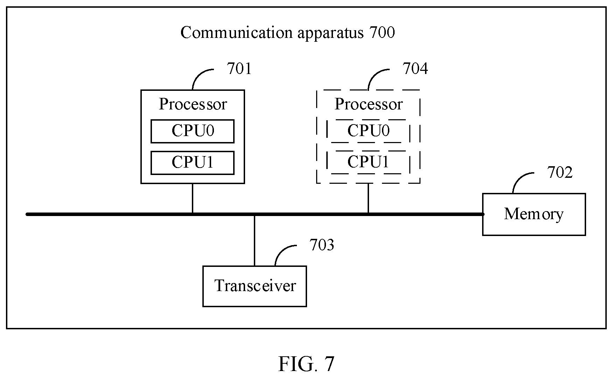

For example, FIG. 7 is a diagram of a structure of another communication apparatus according to an embodiment of this application. The communication apparatus may be a terminal device or a network device, or may be a chip (system) or another part or component that can be disposed in the terminal device or the network device. As shown in FIG. 7, the communication apparatus 700 may include a processor 701. Optionally, the communication apparatus 700 may further include a memory 702 and/or a transceiver 703. The processor 701 is coupled to the memory 702 and the transceiver 703, for example, may be connected to the memory 702 and the transceiver 703 through a communication bus.

The following describes each part in the communication apparatus 700 in detail with reference to FIG. 7.

The processor 701 is a control center of the communication apparatus 700, and may be one processor, or may be a general term of a plurality of processing elements. For example, the processor 701 is one or more central processing units (central processing units, CPUs), may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

Optionally, the processor 701 may execute various functions of the communication apparatus 700 by running or executing a software program stored in the memory 702 and invoking data stored in the memory 702.

In specific implementation, in an embodiment, the processor 701 may include one or more CPUs, for example, a CPU0 and a CPU1 shown in FIG. 7.

In specific implementation, in an embodiment, the communication apparatus 700 may alternatively include a plurality of processors, for example, the processor 701 and a processor 704 shown in FIG. 7. Each of the processors may be a single-core processor (single-CPU), or may be a multi-core processor (multi-CPU). The processor herein may be one or more devices, circuits, and/or processing cores configured to process data (for example, computer program instructions).

The memory 702 is configured to store a software program for performing the solutions provided in embodiments of this application, and the processor 701 controls execution of the software program. For a specific implementation, refer to the foregoing method embodiments. Details are not described herein again.

Optionally, the memory 702 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. This is not limited thereto. The memory 702 may be integrated with the processor 701, or may exist independently, and is coupled to the processor 701 through an interface circuit (not shown in FIG. 7) in the communication apparatus 700. This is not specifically limited in this embodiment of this application.

The transceiver 703 is configured to communicate with another communication apparatus. For example, the communication apparatus 700 is a terminal device, and the transceiver 703 may be configured to communicate with a network device or communicate with another terminal device. For another example, the communication apparatus 700 is a network device, and the transceiver 703 may be configured to communicate with a terminal device or communicate with another network device.

Optionally, the transceiver 703 may include a receiver and a transmitter (not separately shown in FIG. 7). The receiver is configured to implement a receiving function, and the transmitter is configured to implement a sending function.

Optionally, the transceiver 703 may be integrated with the processor 701, or may exist independently, and is coupled to the processor 701 through an interface circuit (not shown in FIG. 7) in the communication apparatus 700. This is not specifically limited in this embodiment of this application.

It should be noted that, the structure of the communication apparatus 700 shown in FIG. 7 does not constitute a limitation on the communication apparatus. An actual communication apparatus may include more or fewer parts than those shown in the figure, combine some parts, or have different part arrangement.

In addition, for technical effects of the communication apparatus 700, refer to the technical effects of the communication method in the foregoing method embodiment. Details are not described herein again.

An embodiment of this application provides a communication system. The communication system includes the foregoing network device and terminal device.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

An embodiment of this application further provides a computer-readable storage medium. The computer-readable storage medium stores a computer program or instructions. When the computer program or the instructions are executed by a computer, functions of any one of the foregoing method embodiments are implemented.

An embodiment of this application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding. In embodiments of this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that the system, apparatuses, and methods described in embodiments of this application may alternatively be implemented in another manner. For example, the described apparatus embodiments are merely examples. For example, division into the units is merely logical function division. There may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, to be specific, may be located together in the same place or distributed on a plurality of network units. Parts displayed as units may or may not be physical units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device like a server or a data center integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

**1.** A communication method, wherein the method comprises:

determining, by a network device, that at least one non-cell-defining synchronization signal/physical broadcast channel block NCD-SSB in X NCD-SSBs in a first bandwidth part BWP is used for measurement, wherein the X NCD-SSBs have different frequency domain positions, and X is a positive integer;

sending, by the network device, first configuration information to a terminal device, wherein the first configuration information comprises configuration parameters of the X NCD-SSBs; and

sending, by the network device, the X NCD-SSBs based on the configuration parameters of the X NCD-SSBs, wherein the X NCD-SSBs comprise at least one NCD-SSB used for measurement.

2. The method according to claim 1, wherein the method further comprises:
sending, by the network device, first indication information to the terminal device, wherein the first indication information indicates the at least one NCD-SSB used for measurement in the X NCD-SSBs.

3. The method according to claim 1, wherein the first configuration information comprises first indication information, and the first indication information indicates the at least one NCD-SSB used for measurement in the X NCD-SSBs.

4. A communication method, wherein the method comprises:

receiving, by a terminal device, first configuration information from a network device, wherein the first configuration information comprises a configuration parameter of X non-cell-defining synchronization signal/physical broadcast channel blocks NCD-SSBs in a first bandwidth part BWP, the X NCD-SSBs have different frequency domain positions, at least one NCD-SSB in the X NCD-SSBs is used for measurement, and X is a positive integer; and

receiving, by the terminal device from the network device based on a configuration parameter of at least one NCD-SSB used for measurement in the configuration parameters of the X NCD-SSBs, the at least one NCD-SSB used for measurement.

5. The method according to claim 4, wherein the method further comprises:
receiving, by the terminal device, first indication information from the network device, wherein the first indication information indicates the at least one NCD-SSB used for measurement in the X NCD-SSBs.

6. The method according to claim 4, wherein the first configuration information comprises first indication information, and the first indication information indicates the at least one NCD-SSB used for measurement in the X NCD-SSBs.

7. The method according to claim 5 or 6, wherein the method further comprises:
determining, by the terminal device based on the configuration parameters of the X NCD-SSBs and the first indication information, the configuration parameter of the at least one NCD-SSB used for measurement in the configuration parameters of the X NCD-SSBs.

8. The method according to claim 4, wherein the method further comprises:
determining, by the terminal device, based on the configuration parameters of the X NCD-SSBs and preconfigured information about an NCD-SSB used for measurement, the configuration parameter of the at least one NCD-SSB used for measurement in the configuration parameters of the X NCD-SSBs.

9. The method according to any one of claims 1 to 8, wherein the configuration parameters of the X NCD-SSBs comprises at least one of the following: frequency domain position information, time domain position information, periodicity information, beam information, or transmit power information.

10. The method according to claim 9, wherein the frequency domain position information of the X NCD-SSBs comprises frequency domain position information of each NCD-SSB in the X NCD-SSBs relative to a reference resource block, or an absolute radio frequency channel number of the X NCD-SSBs.

11. The method according to claim 9 or 10, wherein the time domain position information of the X NCD-SSBs comprises position information of each NCD-SSB in the X NCD-SSBs relative to a cell-defining synchronization signal/physical broadcast channel block CD-SSB, or a system frame number and/or a half-frame number of a $1^{st}$ SSB synchronization burst set of each NCD-SSB in the X NCD-SSBs.

12. The method according to claim 11, wherein the position information of each NCD-SSB in the X NCD-SSBs relative to the CD-SSB comprises:

an offset value of the 1st synchronization burst set of each NCD-SSB in the X NCD-SSBs relative to a 1st synchronization burst set of the CD-SSB.

13. The method according to claim 12, wherein the offset value comprises at least one of the following: 5 ms, 10 ms, 15 ms, 20 ms, 40 ms, 60 ms, or 80 ms.

14. The method according to any one of claims 9 to 13, wherein the X NCD-SSBs have different time domain position information.

15. The method according to any one of claims 9 to 14, wherein the X NCD-SSBs have different periodicity information.

16. The method according to any one of claims 9 to 15, wherein a value of a periodicity of the X NCD-SSBs is any one of the following: 320 ms, 640 ms, 1280 ms, or 2560 ms.

17. The method according to any one of claims 9 to 16, wherein a beam of the X NCD-SSBs is the same as beam information of the CD-SSB.

18. The method according to any one of claims 9 to 17, wherein the X NCD-SSBs have same transmit power information.

19. A communication apparatus, wherein the apparatus comprises a processing module and a transceiver module, wherein

the processing module is configured to determine that at least one non-cell-defining synchronization signal/physical broadcast channel block NCD-SSB in X NCD-SSBs in a first bandwidth part BWP is used for measurement, wherein the X NCD-SSBs have different frequency domain positions, and X is a positive integer; the transceiver module is configured to send first configuration information to a terminal device, wherein the first configuration information comprises configuration parameters of the X NCD-SSBs; and the processing module is further configured to send the X NCD-SSBs based on the configuration parameters of the X NCD-SSBs, wherein the X NCD-SSBs comprise at least one NCD-SSB used for measurement.

20. The apparatus according to claim 19, wherein the transceiver module is further configured to send first indication information to the terminal device, wherein the first indication information indicates the at least one NCD-SSB used for measurement in the X NCD-SSBs.

21. The apparatus according to claim 19, wherein the first configuration information comprises first indication information, and the first indication information indicates the at least one NCD-SSB used for measurement in the X NCD-SSBs.

22. A communication apparatus, wherein the apparatus comprises a processing module and a transceiver module, wherein

the transceiver module is configured to receive first configuration information from a network device, wherein the first configuration information comprises a configuration parameter of X non-cell-defining synchronization signal/physical broadcast channel blocks NCD-SSBs in a first bandwidth part BWP, the X NCD-SSBs have different frequency domain positions, at least one NCD-SSB in the X NCD-SSBs is used for measurement, and X is a positive integer; and the processing module is configured to receive, from the network device based on a configuration parameter of at least one NCD-SSB used for measurement in the configuration parameters of the X NCD-SSBs, the at least one NCD-SSB used for measurement.

23. The apparatus according to claim 22, wherein the transceiver module is further configured to receive first indication information from the network device, wherein the first indication information indicates the at least one NCD-SSB used for measurement in the X NCD-SSBs.

24. The apparatus according to claim 22, wherein the first configuration information comprises first indication information, and the first indication information indicates the at least one NCD-SSB used for measurement in the X NCD-SSBs.

25. The apparatus according to claim 23 or 24, wherein the processing module is further configured to determine, based on the configuration parameters of the X NCD-SSBs and the first indication information, the configuration parameter of the at least one NCD-SSB used for measurement in the configuration parameters of the X NCD-SSBs.

26. The apparatus according to claim 22, wherein the processing module is further configured to determine, based on the configuration parameters of the X NCD-SSBs and preconfigured information about an NCD-SSB used for measurement, the configuration parameter of the at least one NCD-SSB used for measurement in the configuration parameters of the X NCD-SSBs.

27. The apparatus according to any one of claims 19 to 26, wherein the configuration parameters of the X NCD-SSBs comprises at least one of the following: frequency domain position information, time domain position information, periodicity information, beam information, or transmit power information.

28. The apparatus according to claim 27, wherein the frequency domain position information of the X NCD-SSBs comprises frequency domain position information of each NCD-SSB in the X NCD-SSBs relative to a reference resource block, or an absolute radio frequency channel number of the X NCD-SSBs.

29. The apparatus according to claim 27 or 28, wherein the time domain position information of the X NCD-SSBs comprises position information of each NCD-SSB in the X NCD-SSBs relative to a cell-defining synchronization signal/physical broadcast channel block CD-SSB, or a system frame number and/or a half-frame number of a $1^{st}$ SSB synchronization burst set of each NCD-SSB in the X NCD-S SB s.

30. The apparatus according to claim 29, wherein the position information of each NCD-SSB in the X NCD-SSBs relative to the CD-SSB comprises:
an offset value of the $1^{st}$ synchronization burst set of each NCD-SSB in the X NCD-SSBs relative to a $1^{st}$ synchronization burst set of the CD-SSB.

31. The apparatus according to claim 30, wherein the offset value comprises at least one of the following: 5 ms, 10 ms, 15 ms, 20 ms, 40 ms, 60 ms, or 80 ms.

32. The apparatus according to any one of claims 27 to 31, wherein the X NCD-SSBs have different time domain position information.

33. The apparatus according to any one of claims 27 to 32, wherein the X NCD-SSBs have different periodicity information.

34. The apparatus according to any one of claims 27 to 33, wherein a value of a periodicity of the X NCD-SSBs is any one of the following: 320 ms, 640 ms, 1280 ms, or 2560 ms.

35. The apparatus according to any one of claims 27 to 34, wherein a beam of the X NCD-SSBs is the same as beam information of the CD-SSB.

36. The apparatus according to any one of claims 27 to 35, wherein the X NCD-SSBs have same transmit power information.

37. A communication apparatus, comprising a processor, wherein the processor is coupled to a memory;

the memory is configured to store a computer program; and
the processor is configured to execute the computer program stored in the memory, to enable the communication apparatus to perform the method according to any one of claims 1 to 18.

38. A computer-readable storage medium, wherein the computer-readable storage medium stores a computer program or instructions, and when the computer program or the instructions are run on a computer, the computer is enabled to perform the method according to any one of claims 1 to 18.

39. A computer program product, wherein the computer program product comprises a computer program or instructions, and when the computer program or the instructions are run on a computer, the computer is enabled to perform the method according to any one of claims 1 to 18.

FIG. 1

FIG. 2

FIG. 3

S401: Determine that at least one NCD-SSB in X NCD-SSBs in a first BWP is used for measurement

S402: First configuration information

S403: X NCD-SSBs

S404: Receive, from the network device based on a configuration parameter of the at least one NCD-SSB used for measurement in a configuration parameter of the X NCD-SSBs, the at least one NCD-SSB used for measurement

FIG. 4

Network
device

Terminal
device

S501: Determine a rate
matching pattern

S502: Configuration parameter
of the rate matching pattern

S503: Determine the rate
matching pattern

FIG. 5

Communication apparatus 600

601    602

Processing
module

Transceiver
module

FIG. 6

FIG. 7

EP 4 564 882 A1

# INTERNATIONAL SEARCH REPORT

| International application No. |
| --- |
| **PCT/CN2023/104313** |

**A. CLASSIFICATION OF SUBJECT MATTER**

H04W24/02(2009.01)i; H04W56/00(2009.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VEN, WPABS, ENTXT, VCN, 3GPP: 同步, 带宽部分, 非小区定义, 小区定义, 同步信号块, 同步信息块, 测量, 频域, 时域, 周期, 波束, synchronization, BWP, non cell-defining, NCD-SSB, CD-SSB, measure, frequency, time, period, beam

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116095712 A (HUAWEI TECHNOLOGIES CO., LTD.) 09 May 2023 (2023-05-09) description, paragraphs [0136]-[0193] | 1-39 |
| X | CN 114641083 A (HUAWEI TECHNOLOGIES CO., LTD.) 17 June 2022 (2022-06-17) description, paragraphs [0077]-[0199] | 1-39 |
| X | CN 110475335 A (HUAWEI TECHNOLOGIES CO., LTD.) 19 November 2019 (2019-11-19) description, paragraphs [0054]-[0099] | 1-39 |
| X | RAN2. "R2-2109448,Reply LS on use of NCD-SSB instead of CD-SSB for RedCap UE" *3GPP TSG-RAN WG2 Meeting #116-e*, 12 November 2021 (2021-11-12), pages 1-2 | 1-39 |
| X | VIVO et al. "R2-2109741,Discussion on NCD SSB and UE type for RedCap UEs" *3GPP TSG-RAN WG2 Meeting #116-e*, 12 November 2021 (2021-11-12), pages 1-4 | 1-39 |
| A | CN 113660730 A (DATANG MOBILE COMMUNICATIONS EQUIPMENT CO., LTD.) 16 November 2021 (2021-11-16) entire document | 1-39 |

☑ Further documents are listed in the continuation of Box C.  ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **25 September 2023** | **28 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/104313** |

| C. | DOCUMENTS CONSIDERED TO BE RELEVANT | |
|---|---|---|
| Category* | Citation of document, with indication, where appropriate, of the relevant passages | Relevant to claim No. |
| A | US 2021028852 A1 (LG ELECTRONICS INC.) 28 January 2021 (2021-01-28)<br>entire document | 1-39 |

Form PCT/ISA/210 (second sheet) (July 2022)

International application No.

**PCT/CN2023/104313**

| Patent document cited in search report | | | Publication date (day/month/year) | Patent family member(s) | | | Publication date (day/month/year) |
|---|---|---|---|---|---|---|---|
| CN | 116095712 | A | 09 May 2023 | WO | 2023078239 | A1 | 11 May 2023 |
| CN | 114641083 | A | 17 June 2022 | None | | | |
| CN | 110475335 | A | 19 November 2019 | WO | 2019214739 | A1 | 14 November 2019 |
| | | | | KR | 20210008053 | A | 20 January 2021 |
| | | | | JP | 2021522750 | A | 30 August 2021 |
| | | | | JP | 7266617 | B2 | 28 April 2023 |
| | | | | US | 2021058879 | A1 | 25 February 2021 |
| | | | | US | 11622339 | B2 | 04 April 2023 |
| | | | | EP | 3783970 | A1 | 24 February 2021 |
| | | | | EP | 3783970 | A4 | 23 June 2021 |
| CN | 113660730 | A | 16 November 2021 | WO | 2021227754 | A1 | 18 November 2021 |
| | | | | EP | 4152874 | A1 | 22 March 2023 |
| | | | | US | 2023199696 | A1 | 22 June 2023 |
| US | 2021028852 | A1 | 28 January 2021 | WO | 2019194490 | A1 | 10 October 2019 |
| | | | | US | 11177869 | B2 | 16 November 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210971900